# EUROPEAN PATENT APPLICATION

(11) **EP 0 876 035 A2**
(43) Date of publication of application: **04.11.1998**
(21) Application number: 98107171.5
(22) Date of filing: 20.04.1998
(51) Int. Cl.: H04M 1/00

(54) **Voice recognition display input control for controlling a virtual image apparatus**

(30) Priority: 28.04.1997 US 845881
(71) Applicant: MOTOROLA, INC., Schaumburg, IL 60196 (US)
(72) Inventor: Jachimowicz, Karen E., Laveen, Arizona 85339 (US); Nelson, Ronald J., Scottsdale, Arizona 85260 (US)
(74) Representative: Williamson, Simeon

(57) **Abstract**

Portable electronics equipment (30) having a virtual display (10) including display electronics and optics (18) for providing a virtual image (50) in the display, a voice recognizer (108) and a display controller (102) connected to the display electronics for producing a voice recognition input control in the virtual image display (10) and an optional device controller (110) for producing a voice recognition input control to the device functions. The voice recognizer (108) and display controller (102) are interfaced with the virtual image (50) to activate functions such as pull-down menus and image selection.

## Description

### Field of the Invention

The present invention pertains to the generation of virtual images in portable electronics equipment and more specifically to user interface with generated virtual images in portable electronics equipment.

### Background of the Invention

Portable electronics equipment, such as radios, cellular and cordless telephones, pagers and the like, are becoming increasingly popular. In many instances it is desirable to provide apparatus on the equipment to supply the operator with visual messages that include graphics and printed information. The problem is that prior art apparatus providing these functions require relatively high electrical power and require a great amount of area to be sufficiently large to produce useful and visually perceivable information.

In the prior art, for example, it is common to provide visual apparatus utilizing liquid crystals, directly viewed light emitting diodes, etc. These produce very large and cumbersome displays that greatly increase the size of the receiver and require relatively large amounts of power.

In one instance, the prior art includes a scanning mirror to produce a visually perceivable image but again this requires relatively large amounts of power and is very complicated and sensitive to shock. Also, the scanning mirror causes vibration in the unit which can be felt by the user, reducing comfort and acceptability.

Apparatus incorporating a miniature virtual image, which solves most of the problems mentioned above, is disclosed, for example, in U.S. Patent No. 5,224,198, entitled "WAVEGUIDE VIRTUAL IMAGE DISPLAY", issued June 29, 1993. Typically, the products in which the miniature virtual image display is incorporated are small hand held devices. Many of the proposed applications would benefit from some user interface with the display.

Typically, in portable electronics equipment, such as radios, cellular and cordless telephones, pagers and the like, numbers to be dialed or functions to be programmed into the receiver are input by way of a manual keyboard sometimes accompanied by a small display which illustrates the number being dialed or the function being programmed. Because of finger size and visual perception, the keyboard and its display are often the limiting factor in determining the size of the receiver. Further, the keyboard and direct view display require considerable volume for buttons (and space for movement), display module and associated electronics.

Accordingly, it is a purpose of the present invention to provide for two-way interaction between a user and a virtual image apparatus.

It is a further purpose of the present invention to provide a new and improved voice recognition responsive user interface to a virtual image display.

It is a further purpose of the present invention to provide a new and improved voice recognition responsive user interface to a virtual image for use in small hand held devices, the display input being controllable through the recognition of voice commands by the device.

### Summary of the Invention

The above problems and others are at least partially solved and the above purposes and others are realized in portable electronics equipment having a virtual image display including display electronics and optics for providing a virtual image in the display and cursor electronics connected to the display electronics for producing a voice recognition input control in the virtual image display, continuously alterable in accordance with recognition of voice commands by the device.

### Brief Description of the Drawings

Referring to the drawings:
FIG. 1 is a simplified schematic view of a compact virtual image display apparatus embodying the present invention;
FIG. 2 is a simplified block diagram of electronics associated with the compact virtual image display apparatus of FIG. 1;
FIG. 3 is a simplified schematic view of an alternative embodiment of a compact virtual image display apparatus of the present invention;
FIG. 4 is an enlarged view in top plan of an LED array, portions thereof broken away, forming a portion of the electronics of FIG. 2;
FIG. 5 is a perspective view of portable communication equipment embodying the present invention;
FIG. 6 is a simplified sectional view of the compact virtual image display apparatus as seen from the line 6-6 of FIG. 5;
FIG. 7 is a typical view as seen by the operator of the portable communication receiver of FIG. 5 showing a menu shown on the display in response to a spoken command deciphered by the voice recognition circuitry;
FIG. 8 is a side view of an embodiment of a waveguide virtual image display apparatus;
FIG. 9 is a simplified block diagram of a direct retinal scan type of virtual image display apparatus;
FIG. 10 is a block diagram of electronics for communication equipment embodying the present invention; and
FIG. 11 is a schematic block diagram of the method for voice recognition by a display controller and/or device controller of the present invention.

### Description of the Preferred Embodiments

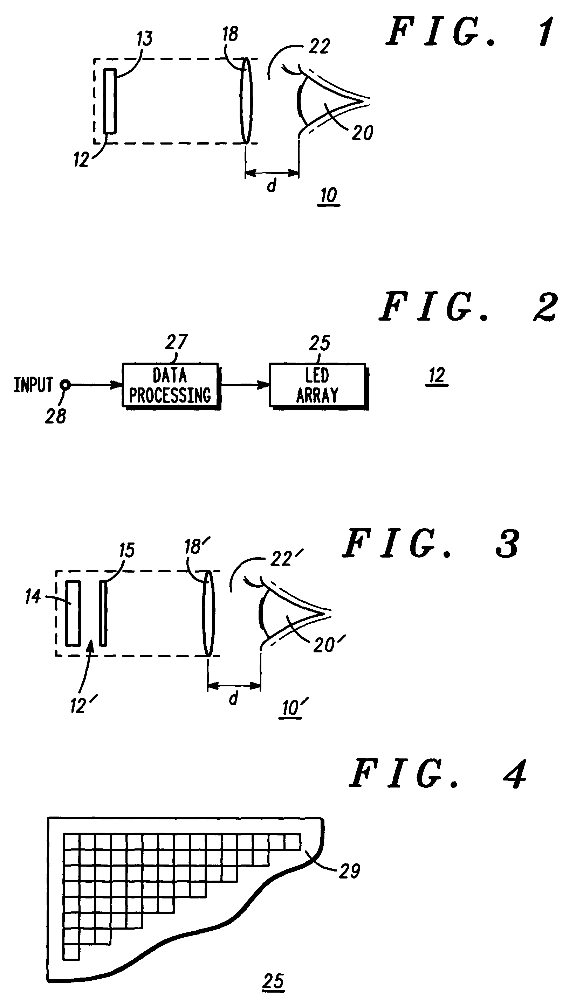

Referring specifically to FIG. 1, an example of a compact virtual image display 10 is illustrated in a simplified schematic view. Display 10 includes apparatus 12 for providing an image on a surface 13. An optical system, represented by lens 18, is positioned in spaced relation to surface 13 of apparatus 12 and produces a virtual image viewable by an eye 20 spaced from an aperture 22 defined by lens 18.

Apparatus 12 is illustrated in more detail in FIG. 2 and includes, for example, semiconductor electronics such as a light emitting device (LED) array 25 driven by data processing circuits 27. Data processing circuits 27 include, for example, logic and switching circuit arrays for controlling each LED in LED array 25. Data processing circuits 27 include, in addition to or instead of the logic and switching arrays, a microprocessor or similar circuitry for processing input signals to produce a desired image on a device such as LED array 25. It will be understood that data processing circuits 27 and LED array 25, while illustrated separately for purposes of this description, could be formed on the same semiconductor chip in some applications.

In this specific embodiment LED array 25 is utilized because of the extremely small size that can be achieved and because of the simplicity of construction and operation. It will of course be understood that other image generating devices may be utilized, including but not limited to lasers, liquid crystal displays (LCDs), cathode ray tubes (CRTs), field emission displays (FEDs), electroluminescent displays, organic light emitting devices (OLEDs), etc. Accordingly, illustrated in FIG. 3, in simplified schematic view, is an example of an alternative embodiment of a virtual image display, generally referenced as 10'. Virtual image display 10' includes an image generating apparatus 12', generally composed of a backlight 14 and a liquid crystal display 15. In this particular embodiment backlight 14 is disclosed as composed of a plurality of light emitting diodes, but it will of course be understood that other backlight sources may be utilized, including but not limited to cold cathode fluorescent tubes (CCFTs), organic light emitting devices (OLEDs), electroluminescent backlights, flat cathode ray tubes (FCRTs), etc. An optical system, represented by lens 18', is positioned in spaced relation to liquid crystal display 15 and produces a virtual image viewable by an eye 20' spaced a distance "d" from an aperture 22' defined by lens 18'.

It is disclosed that during typical operation of virtual image display 10 or 10', generating a full color image can be accomplished in one of two ways: with spatially additive colors, where each individual full color pixel is composed of three sub-pixels, one red, one green and one blue, and the individual subpixels are used to create additional colors or with temporally additive colors, where each pixel is time-sequenced through the red, green and blue colors to create the additional colors. The temporally additive color generation system, typically referred to as field-sequential color, has the advantage that each individual pixel can be any color, where in the spatially additive system it takes three individual primary color pixels to make a full color display. In this way the spatial resolution of the field sequential color display is three times that of the spatially additive display. The field sequential color display must be run at a higher bandwidth, because each pixel must run through the three primary colors within 1/60th of a second. This means that each individual color frame must be completed in 1/180th of a second.

Referring specifically to FIG. 4, a plan view of LED array 25 is illustrated in which the LEDs are formed in a regular pattern of rows and columns on a single semiconductor chip 29. Portions of chip 29 are broken away to simplify the drawing but it should be understood that many of the other circuits to be described herein could be included on the same chip. By addressing specific LEDs by row and column in a well known manner, the specific LEDs are energized to produce an image. Digital or analog data is received at input terminal 28 and converted by data processing circuits 27 into signals capable of energizing selected LEDs to generate the predetermined image.

It will be understood by those skilled in the art that LED array 25 and semiconductor chip 29 are greatly enlarged in the figures. The actual size of semiconductor chip 29 is on the order of a few milli-meters along each side, with he light emitting area or array being generally in the range of 2 to 50 milli-meters and preferably 5 to 10 milli-meters, with each LED being less than 20 microns on each side and preferably on the order of as little as one micron on a side. It should be understood that the actual light emitting device array is much smaller, because bonding pads, etc. add several milli-meters of area on each side. Generally, the larger size chips simply mean that more light emitting devices are used in the array to provide more definition, color, etc. As the semiconductor technology reduces the size of the chip, greater magnification and smaller lens systems are required.

The lens system, represented schematically by lens 18, is mounted in spaced relation from surface 13 of apparatus 12 so as to receive the image from surface 13, magnify it a predetermined amount and create the aperture within which the virtual image is viewed. In the present embodiment, lens 18 magnifies the image fifteen times (15x) so that the image from LED array 25 is magnified fifteen times its original angular size. Generally, a magnification of at least ten is required to magnify the real image sufficiently to be perceived by a human eye. It will of course be understood that the lens system may be adjustable for focus and additional magnification, if desired, or may be fixed in a housing for simplicity.

Eye relief is the distance that eye 20 can be positioned from lens system 18 (the viewing aperture) and still properly view the image, which distance is denoted by "d" in FIG. 1. Because of the size of lens 18, eye relief, or the distance d, is sufficient to provide comfortable viewing and in the present embodiment is great enough to allow a viewer to wear normal eyeglasses, if desired.

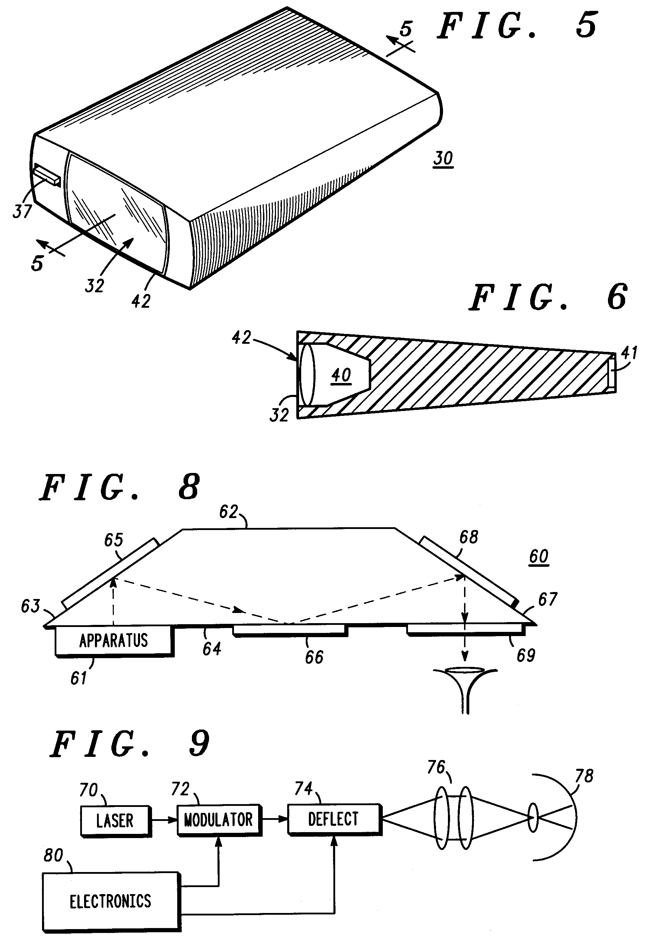

FIG. 5, illustrates portable electronics equipment 30. It will of course be understood that portable electronics equipment 30 can be any of the well known portable devices, such as a cellular or cordless telephone, a two-way radio, a pager, a data bank, a smart card reader, web browser, portable computer, etc. Portable electronics equipment 30 includes a microphone 37 positioned on the exterior of equipment 30 and an viewing aperture 42 through which a virtual image display 32 can be viewed by the user.

Equipment 30 is intended to be fully operational by voice recognition, and includes a voice recognition capabilities for controlling the device functions and the display (discussed presently). More particularly, a voice recognition device controller (discussed presently) is provided so that an operator of portable electronics equipment 30 can provide power, operate various functions, or the like of equipment 30. In addition, there is provided a voice recognition display controller (discussed presently) for controlling the virtual image display 32 being viewed through aperture 42.

Portable electronics equipment 30 is designed to be held by an operator with one hand. The control electronics are mounted in the hand held electronic device and connected to the device controller and display electronics for producing a voice responsive virtual image display 32 and device 30. As previously stated, portable electronic device 30 is operationally responsive through voice recognition to control the device functions. More particularly, device 30 can be controlled by voice recognition, such as for turning the power ON/OFF, dialing phone numbers when equipment 30 is a telephone, or the like. Other means of activating and deactivating power to portable electronics equipment 30 as well as similar functional controls are anticipated by this disclosure. Once the power to portable electronics equipment 30 is activated, voice recognition of specific commands by equipment 30 is translated into control of virtual image display 32. In general, the operator views the virtual image through a viewing aperture 42, selects the desired choice within display 32 by delivering a voice command into microphone 37 of portable electronics equipment 30. Other means of sending an image selection signal are anticipated by this disclosure. More particularly, there may be provided an image selection control switch (not shown) positioned on portable electronics equipment 30 so as to be operated with a digit, such as a finger or thumb, of the hand holding portable electronics equipment 30. In this instance, the operator would verbally deliver a command to the device which would be translated by provided cursor electronics, to movement of a cursor in the virtual image display 32. The operator would then activate the chosen command by selecting the choice through the image selection control switch.

Referring to FIG. 6, a simplified sectional view of portable electronics equipment 30, as seen from the line 6-6 of FIG. 5, is illustrated. Miniature virtual display 32 includes image generation apparatus 41 for providing a real image to a fixed optical system 40, which in turn produces a virtual image viewable by the operator through viewing aperture 42. Fixed optical system 40 is constructed to magnify the entire real image from image generation apparatus 41, without utilizing moving parts, so that the virtual image viewable through aperture 42 is a complete frame, or picture, which appears to be very large and is easily discernible by the operator. By producing a magnified virtual image from the very small real image of apparatus 41, fixed optical system 40 is relatively small and adds virtually no additional space requirements to portable electronics equipment 30. Optical system 40 is constructed with no moving parts, other than optional features such as focusing, zoom lenses, etc. Further, apparatus 41 requires very little electrical power to generate the real image and, therefore, adds very little to the power requirements of portable electronics receiver 30.

Referring to FIG. 7, there is shown a typical view as seen by the operator through viewing aperture 42 of virtual display 32 of portable electronics equipment 30 of FIG. 5. Virtual image 50, as seen through viewing aperture 42, is shown with an included feature of a pull-down menu 51, which is actuated to the pull-down position by voice recognition of commands delivered to equipment 30, translating to selection of the desired function/image. In this particular example, pull-down menu 51 has been selected by delivering to equipment 30 a specific recognizable voice command. Next, a further voice recognizable command is delivered to equipment 30 to the pull-down selection name for pull-down menu 51, enabling the operator to select the desired function/image. It is anticipated that a plurality of different pull-down menus, dependent on the specific field of use of equipment 30, will be provided and which can be selected by delivering recognizable commands to the portable electronics equipment 30, thus translating into selection of the desired title.

Pull-down menu 51 may include a variety of functions, or information selections as illustrated in FIG. 7. In this specific example, pull-down menu 51 includes a map directory, which may include statistical map information stored in memory by a base station. Pull-down menu 51 further includes a choice of PAGE/FAX information, which might include, for example, pages or fax messages received by portable electronics equipment 30 and stored in memory. Many other forms of graphical and/or alpha-numeric information might be available to the operator and easily selected by the operator through the delivery of recognizable voice commands to the portable electronics equipment 30. Generally, a voice recognizer (discussed presently) is utilized to submit a signal to the display controller and/or the device controller which translates into a corresponding virtual image being displayed and/or a specific function of the device being activated.

Referring specifically to FIG. 8, another embodiment of a virtual image display 60 is illustrated wherein apparatus 61 (generally similar to apparatus 12 of FIG. 1) is affixed to the inlet of a waveguide 62 for providing a real image thereto. Light rays from the real image at apparatus 61 are directed toward a predetermined area on a first side 63 where they are reflected back toward a second side 64 generally along an optical path defined by sides 63, 64 and 67. It is anticipated that the optical path defined by sides 63, 64 and 67 may in the alternative be of different configuration using a greater or lesser number of definitional sides. Three diffractive elements 65, 66 and 68 are affixed to sides 63, 64 and 67 at the next three predetermined areas, respectively, to which the reflected light rays are directed. Diffractive elements 65, 66 and 68 provide the required amount of chromatic and other aberration correction so that a virtual image of a desired size is viewable through a last refractive element 69 which defines the outlet of optical waveguide 62. Virtual image display 60, or a similar virtual image display, disclosed in U.S. Patent No. 5,224,198, entitled "WAVEGUIDE VIRTUAL IMAGE DISPLAY", issued June 29, 1993, could be utilized, for example, to replace miniature virtual image display 32 of FIG. 5.

FIG. 9 is a block diagram of a direct retinal scan display, which might also be utilized as the miniature image display to replace, for example, miniature virtual image display 32 of FIG. 5. A laser 70, which may be any of the well known lasers including solid state lasers, such as vertical cavity surface emitting lasers, diode lasers, diode-pumped lasers, etc., supplies a coherent light beam to a modulator 72. Modulator 72 impresses video information onto the light beam generally by modulating the intensity of the light beam as, for example, by providing changes in the power level of laser 70. Depending upon the application, the modulation could be as simple as turning laser 70 off and on, which essentially translates into a digital system. Acousto-optic modulators are one of the preferred modulators for most applications, but other techniques, such as electro-optics and mechanical are completely feasible.

The modulated light beam from modulator 72 is directed to a deflection system 74. A lens system 76 is used to focus the light beam from deflection system 74 into an eye 78. The focal length of lens system 76 is chosen so that the scanning system focal point is within the pupil of eye 78 and the coherent beam focal point is at the retina of eye 78.

Timing and control of modulator 72 and deflection system 74 is provided by electronics 80. Electronics 80 includes a basic oscillator, or timer, which provides the timing signals to cause the sweeping and modulating to occur at the proper times. Also, electronics 80 provides video signals to modulator 72 to modulate the light beam to the correct intensity at the required times. Further, electronics 80 provides horizontal and vertical (orthogonal) deflection signals to cause deflection system 74 to periodically scan the light beam in a raster. Depending upon the application and the desired image resolution, the horizontal deflection frequency may be on the order of 15 to 30 kHz., the vertical deflection is no lower than 60 Hz., and the modulating frequency may be on the order of 12 MHz.

The purpose of deflection system 74 is to scan the modulated light beam on the retina of eye 78, or "write" an image on the retina. There are many possible configurations for deflection system 74 and lens system 76, depending upon the application of the display and how it is desired to form the image in eye 78. Additional information on this type of display is available in a copending U.S. patent application entitled "DIRECT RETINAL SCAN DISPLAY", serial no. 08/292,193, filed August 18, 1994, assigned to the same assignee, which is a file wrapper continuation of U.S. patent application entitled "DIRECT RETINAL SCAN DISPLAY" serial no. 07/857,193, filed March 24, 1992. While the direct retinal scan display does not technically generate a virtual image, the direct retinal scan display is included in the definition of a virtual display apparatus for purposes of this disclosure because of the similarity thereto.

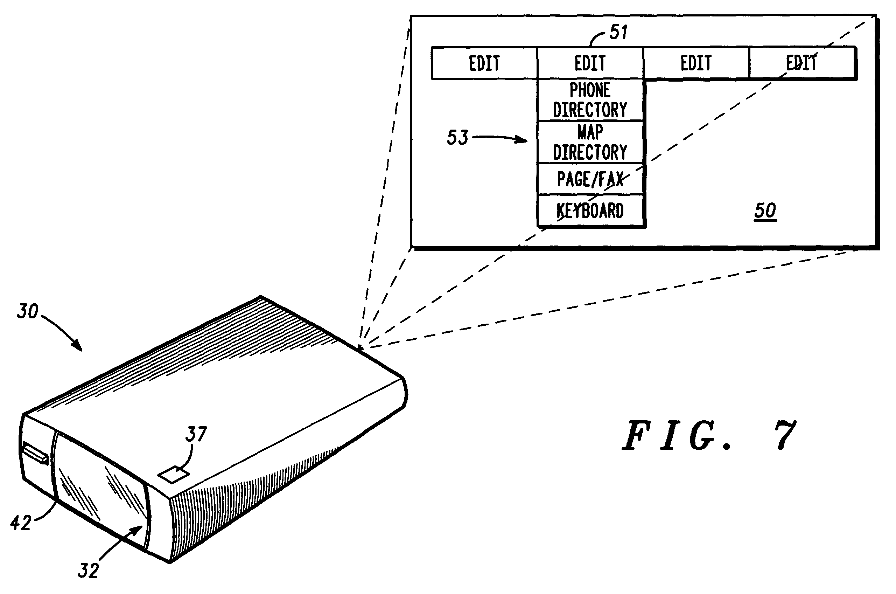

Referring specifically to FIG. 10, a block diagram of electronics for communication equipment embodying the present invention is illustrated. A communication receiver 100 can be any of the well known portable receivers, such as a cellular or cordless telephone, a two-way radio, a pager, web browser, etc. Receiver 100 has a data output connected to a display controller 102 and a device controller 110, which in this particular example may be a microprocessor, a DSP, specially designed logic circuit, etc. A voice recognizer 108 is also connected to an input or inputs of communication receiver 100. Voice recognizer receives voice commands through a microphone 106 and in turn submits the commands to the proper controller 110 or 102 through communication receiver 100. A memory 105 is connected to controller 102 and stores information and messages, graphic and/or alpha-numeric, received by receiver 100 in accordance with the programming of controller 102.

Controller 102 receives input data from memory 105 and voice recognizer 108 and supplies the video data to row and column drivers 114 and 115, respectively, which in turn activate specific light generating devices in a semiconductor array 120 to produce the desired picture or frame of information. In a specific example timing signals are supplied to row drivers 114 to supply an activating potential to each complete row, one at a time, and in a periodic sequence from the first row at the top to the last row at the bottom. Simultaneously a complete row of video data is placed in column drivers 115, which generally include a latching function, and the data is supplied to the row of devices receiving the activating potential from the row drivers 114. When the second row is activated by row drivers 114, a new row of data is switched into array 120 from column drivers 115. In this fashion a complete real image is generated with the definition and quality depending upon the number of devices included in array 120. Generally, it is desirable to include in the range of 500 to 1500 pixels by 500 to 1500 pixels with each pixel including at least one light emitting device, and possible several for purposes of color and/or redundancy. In addition, a device controller 113 receives input data from voice recognizer 108, which in turn activates specific functions of communication receiver 100.

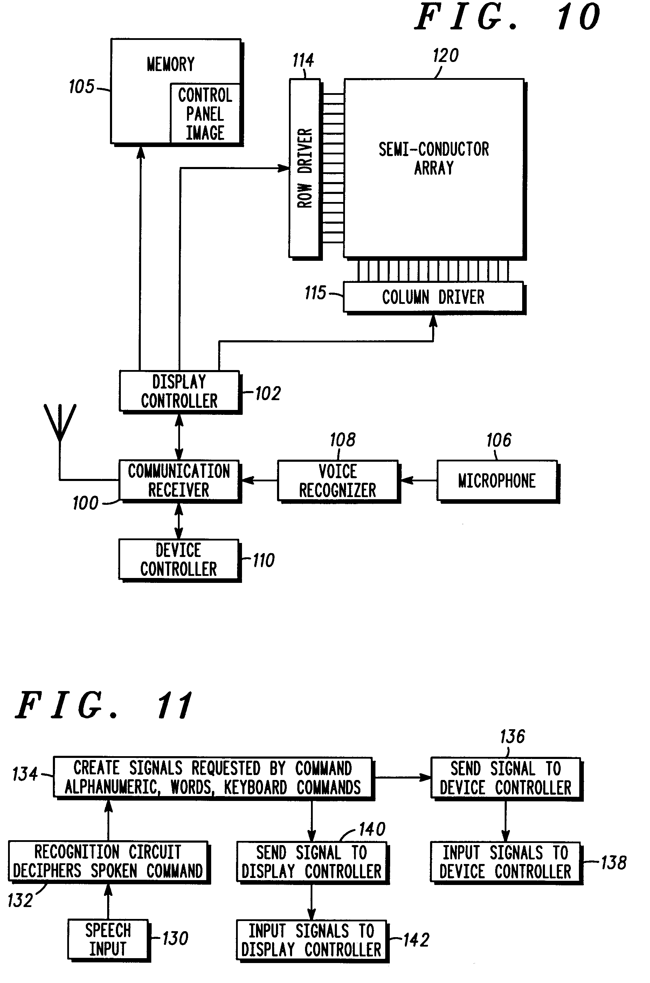

Referring to FIG. 11 illustrated is a schematic block diagram of the method for voice recognition by a display controller and/or device controller of the present invention. Illustrated as a first step in the method is the input of speech 130, more particularly, the input of a voice command. Speech input 130 is received, recognized and deciphered 132 prior to the creation of signals 134 as a result of the requested voice command. Signals 134 are created based on recognition of a command to control the display controller (previously described) or the device controller (previously described). As a result, a command recognizable as relating to the display, results in a signal being sent to the display controller 140, which is ultimately received by the display controller as an input signal 142. A command recognizable as relating to a function of the device, results in a signal being sent to the device controller 136, which is ultimately received by the device controller 138. As a result, the portable communication device of the present invention is fully operational based on the recognition of voice commands received by the device.

Accordingly, a new and improved voice recognition input control for controlling a virtual image apparatus and a virtual image display is disclosed. The new and improved voice recognition input control is designed for use in small hand held electronic devices and is situated so as to be controllable with the hand holding the device. Thus, an apparatus for interaction with a virtual display and portable electronic device is disclosed which is small and easy to operate so that it can be incorporated into very small electronic equipment, such as radios, cellular and cordless telephones, pagers and the like.

While I have shown and described specific embodiments of the present invention, further modifications and improvements will occur to those skilled in the art. I desire it to be understood, therefore, that this invention is not limited to the particular forms shown and I intend in the appended claims to cover all modifications that do not depart from the spirit and scope of this invention.

## Claims

1. Portable electronics equipment with voice recognition responsive input control characterized by:
a hand held electronic device (30);
a virtual display apparatus (10) for providing a magnified perceivable virtual image of a complete frame of alphagraphics in the virtual display apparatus, (10) the virtual display apparatus (10) being mounted in the hand held electronic device (30) for viewing of the magnified perceivable virtual image by an operator; and
a voice recognizer (108) mounted in the hand held electronic device (30) for producing a voice recognition responsive input control (102), the voice recognizer (108) capable of recognizing and deciphering between a display controlling command and a device controlling command.

2. Portable electronics equipment as claimed in claim 1, further characterized in that said virtual display apparatus (10) includes display electronics (80) having a two dimensional array (25) of pixels providing a small real image of a complete frame of alphagraphics and the display electronics (80) include a display controller (102) and circuits for controlling the virtual image in the virtual display apparatus (10) including the selection of specific virtual images from a menu of virtual images.

3. Portable electronics equipment as claimed in claim 1, further characterized in that the hand held electronic device (30) further includes device electronics (80) for controlling operational functions of the device (30).

4. Portable electronics equipment as claimed in claim 3, further characterized in that the device electronics (80) include a device controller (110) and circuits for controlling the device including power control.

5. Portable electronics equipment as claimed in claim 1, further characterized in that the virtual display apparatus (10) includes a plurality of pixels formed on a single substrate (29) in an array (25) arranged in rows and columns with each row including in a range of 50 to 1500 pixels and each column including in a range of 50 to 1500 pixels, each of the plurality of pixels including at least one light emitting diode and the array (25) providing a very small real image, the display apparatus (10) further including at least one optical element (18) including components to magnify the real image at least ten times into a virtual image such that the complete frame of alphagraphics can be perceived by a human eye (20).

6. Portable electronics equipment as claimed in claim 1, further characterized in that the virtual display apparatus (10) includes a plurality of pixels formed in an array (25) arranged in rows and columns with each row including in a range of 50 to 1500 pixels and each column including in a range of 50 to 1500 pixels, the plurality of pixels defined by a backlight device (14) and a liquid crystal display (15) positioned between the backlight (14) and at least one optical element (18'), the optical element (18') including components to magnify the real image at least ten times into a virtual image such that the complete frame of alphagraphics can be perceived by a human eye (20).

7. Portable electronics equipment as claimed in claim 1 further characterized in that a full color virtual image display is achieved using field sequential color techniques.

8. Portable electronics equipment as claimed in claim 1, further characterized by an image selection control switch, the control switch being mounted on the hand held electronic device (30) and includes means for providing an image selection control signal.

9. Portable electronics equipment as claimed in claim 1, further characterized in that the hand held electronic device (30) is designed to be held by the operator with one hand and includes a microphone (106) interfaced with the voice recognizer (108).

10. A method for controlling input in portable electronics equipment characterized by the steps of:
viewing a virtual image display (50) in the portable electronics equipment (30) through a viewing aperture (22), wherein said virtual image display (50) is comprised of display electronics (102) including an image generation apparatus (10) having a two-dimensional array (25) of pixels with each pixel including at least one light emitting device and driving electronics (114 & 115) connected to the array (25) for providing a real image of a complete frame of alphagraphics, a display controller (102) connected to the image generation apparatus (10) for producing a voice recognition input control (108) interfaced with the virtual image display (50) for controlling the virtual image display (50), and an optical system (18) to receive the real image at the viewing aperture (22);
delivering voice command inputs (130) to a microphone (106) interfaced with the portable electronics equipment (30);
receiving and deciphering of the voice command inputs (132) by a voice recognizer (108);
submitting a control signal (136 & 140) from the voice recognizer (108) to one of a display controller (102) and a device controller (110); and
displaying a virtual image (50) in response to the control signal (136 & 140).
